(19) Europäisches Patentamt
European Patent Office
Office européen des brevets

(11) EP 2 058 927 A2

(12) **EUROPEAN PATENT APPLICATION**

(43) Date of publication:
**13.05.2009 Bulletin 2009/20**

(51) Int Cl.:
***H02K 11/00*** (2006.01)

(21) Application number: **08168158.7**

(22) Date of filing: **03.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.11.2007 IT TO20070792**

(71) Applicant: **Indesit Company S.p.A.**
**60044 Fabriano (AN) (IT)**

(72) Inventor: **Conti, Massimiliano**
**60044 Fabriano (Ancona) (IT)**

(74) Representative: **Gallarotti, Franco**
**Buzzi, Notaro & Antonielli d'Oulx Srl,**
**Via Maria Vittoria, 18**
**10123 Torino (IT)**

(54) **Machine for the treatment of textile items**

(57)     A machine, in particular a washing machine having a basket (53), a motor comprising a rotor (11;21) and a stator (15;25), said rotor (11;21) and stator (15;25) comprising magnetic field-generating elements arranged according to respective basic configurations susceptible of generating a respective rotor and stator magnetic field interacting to induce on said stator (15;25) an electromotive force ($\psi$) having a temporal behaviour that varies periodically, said motor (10;20) being associated with said basket (53) through said rotor (11;21),
said basket (53) being susceptible of assuming at least one predetermined angular position ($\theta_p$), said machine being associated with logic control means (55) to detect said predetermined angular position ($\theta_p$). Said magnetic field-generating elements comprise a respective element (24,27) susceptible of perturbing said respective basic configurations and to determine a corresponding deformation (L) in said periodic temporal behaviour of the induced electromotive force ($\psi$),
said logic control means (55) are configured to identify said deformation (L) and employ said deformation (L) as reference position for the detection of the angular position ($\theta_p$).

Fig. 3

EP 2 058 927 A2

**Description**

Field of the invention

The present invention refers to a machine, particularly front-loading, for the treatment, in particular the washing, of laundry, having a washing chamber or tub, a laundry-carrying basket mounted in the tub so to rotate around an axis, motor means to actuate the basket in rotation, comprising a synchronised electric motor itself comprising at least one rotor and one stator, said rotor and stator comprising rotor and stator magnetic field generating elements respectively arranged according to corresponding basic configurations susceptible of generating a corresponding overall rotor magnetic field and an overall stator magnetic field interacting so to induce an electromotive force on said stator during the rotation of said rotor with a time behaviour that varies periodically, said motor being associated with said basket by means of said rotor, said basket being susceptible of assuming at least one predetermined angular position for performing a predetermined function of said laundry washing or laundry drying machine, said machine being also associated with logic control means for detecting said predetermined angular position of said basket.

Prior art

The laundry washing machines (including the so-called "wash-dry" machines) include a housing inside of which a washing chamber or tub is mounted. Inside the tub a basket is provided that in the "European" type of machine is mounted so to rotate around an axis that is substantially horizontal or usually not inclined more than 25° with respect to horizontal.

Such basket is set in motion by motor means that can usually consist of a synchronised permanent magnet electric motor, directly associated with the basket by means of its rotor.

Such electric motor is driven to set the basket in rotation at different angular speeds, including the centrifuge speed, needed by the washing programs, velocities that, for example, for a synchronised electric motor can be provided by means of three-phase supply at the corresponding frequency.

However, the operation cycles and the washing programs of a laundry washing machine sometimes require not only control of the rotation speed of the basket, but also control of the angular position of the basket, for example, to stop it in a known position.

For example, in the so-called top loading laundry washing machines, that is, where the basket is accessed through a top door of the washing chamber, the basket is itself provided with a door on the side wall. Therefore, in order to access the basket it is necessary that the basket be positioned so that such door is aligned with the top door.

Therefore, such systems require the insertion of additional sensors to detect the position either on the motor shaft or on the basket. Furthermore, the presence of such sensors requires the assignment of additional signal inputs on the controller of the laundry washing machine that oversees control of the motor, with the need for installation of connections and wiring.

Summary of the invention

One object of the present invention is that of realising a laundry washing machine able to detect a determined position of the basket during its movement without the need of resorting to dedicated position sensor means.

A more specific object of the present invention is that of realising a machine for the treatment, in particular the washing, of laundry able to recognise a position and having a liquid emission system directly inside of the laundry basket, allowing efficient treatment performances to be obtained and being simple and reliable to obtain with respect to the prior art.

A further object of the present invention is that of realising an electric motor able to autonomously recognise whether the rotor is in one or more predetermined positions.

At least one of the above-cited objects is achieved, according to the present invention, by a machine for laundry washing and/or drying having the features indicated in the annexed claims. The claims constitute an integral part of the technical teaching provided herein relative to the invention.

According to one embodiment, the machine is provided with an electric motor in which the rotor and stator magnetic field-generating elements comprise at least one respective element susceptible of perturbing the respective basic configurations according to which said magnetic field-generating elements are arranged and determining a corresponding deformation of said periodic time behaviour of the induced electromotive force, while the logic control means are configured to identify said deformation of the periodic temporal behaviour of the induced electromotive force and to employ the deformation as a position reference for the detection of the angular position of the basket.

Preferably, the stator elements comprise at least a plurality of coils each comprising a plurality of turns, arranged at regular intervals along a first circumference and suitable for generating the overall stator magnetic field when electrical current passes through them, the number of said plurality of turns of each coil in the basic configuration depending on the position of the coil on the first circumference based on a periodic distribution, the at least one respective element susceptible of perturbing the respective stator basic configuration comprising at least one coil of the at least one plurality of coils which comprises a number of turns predetermined and different with respect to the number of the plurality of turns of each coil in said basic configuration; the rotor elements comprise a plurality of magnets, in particular permanent magnets, arranged in the respective basic configuration at regular intervals along a second circumference and suitable for generating a magnetic field intensity with a first determined value, the at least one respective element susceptible of perturbing the respective basic rotor configuration comprising at least one magnet suitable for generating a second magnetic field with an intensity of a second determined value different with respect to the first value determined according to the respective basic configuration.

Additionally, according the one embodiment, a method is also proposed for the positioning of a synchronised electric motor rotor, in particular for a laundry washing machine, comprising the operation of:

measuring the electromotive force induced on stator coils of said synchronised electric motor;
and also envisioning the operations of:

providing a synchronised electric motor susceptible of having a deformation in the periodic temporal behaviour of the induced electromotive force;
detecting the need for said deformation, and
positioning the motor within the specific electric revolution in which said deformation at the required specific positioning angle is detected.

By means of such solutions it is possible to determine the electric revolution in which such deformation occurs through detection of the deformation in the induced electromotive force, thus allowing the successive precise positioning of the motor rotor at a specific angle of the electric revolution by means of known techniques. Therefore, in this way, it is possible to position the basket in any predetermined angular position without resorting to external sensors of any kind to determine the position of the motor shaft or of the basket.

The features of the above-cited embodiments are summarised in the annexed claims.

Brief description of the drawings

Further objects, features and advantages of the inventive embodiments will be clear from the detailed description that follows, made with reference to the annexed drawings, provided by way of non-limiting example only, wherein:

-    figure 1 is a schematic diagram in lateral view of a laundry washing machine according to the invention;
-    figure 2 schematically represents a known synchronised motor, of the permanent magnet type;
-    figure 3 schematically represents a synchronised motor of the permanent magnet type according to the invention.

Detailed description of preferred embodiments

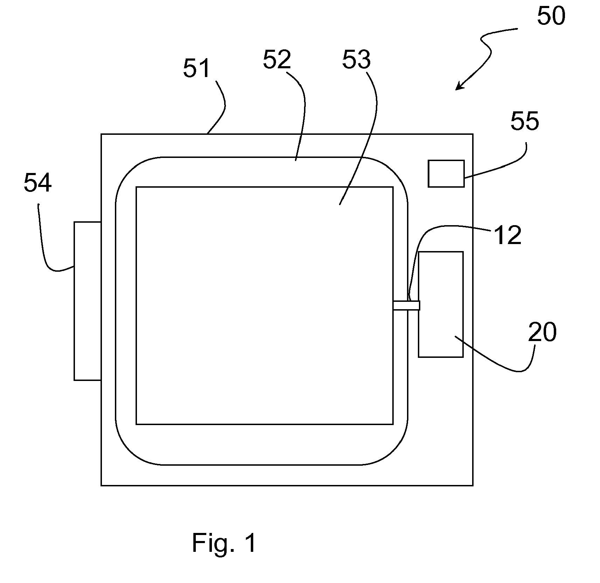

Figure 1 represents, through a schematic diagram, a lateral sectional view in section of a machine for domestic use for treatment (washing and possible drying) of laundry according to the invention, indicated as a whole with the numeric reference 50. Such machine 50 comprises a housing 51 containing a washing tub 52, comprising in turn a basket 53 inside of it. Such basket 53 is directly coupled by means of a shaft 12 with a synchronised electric motor 20. In the example of figure 1, the machine 50 is of the front-loading type, by means of a door 54. The washing machine 50 also comprises a logic control module 55 with the aim of overseeing control of the washing operations and of the operation of the motor 20.

According to the invention, as will be further detailed in the following, the synchronised electric motor 20 is configured to provide an indication on the correspondence between the angular position of its own rotor and one or more predetermined angular positions of the rotor itself.

An introduction will now be preliminarily provided relative to concepts concerning synchronised motors, concepts that are themselves, for the most part, known, with the aim of providing a framework for illustrating the invention.

As is known, the theory overseeing the development of electric motors is essentially based on the Faraday-Neumann-Lentz law, according to which, given a magnetic flux $\Phi_B$ traversing a closed circuit, the electric current induced in such closed circuit is proportional to the variation of flux traversing the area covered by the circuit in a time unit. From such law derives that the electromotive force $\psi_i$ induced in the closed circuit by the variation of the magnetic field $\Delta\Phi_B$ in time $\Delta t$ is

$$\psi_i = -\frac{\Delta\Phi_B}{\Delta t} \qquad (1)$$

When a magnet generating the magnetic flux $\Phi_B$ is considered, only a fraction of the magnetic field generated by it traverses the area delimited by the circuit, a larger fraction the closer the magnet is to the circuit itself. Practically, the entity of the induced electromotive force (back EMF) is directly proportional to the surface of the closed circuit, to the intensity of the magnetic field and to the speed with which such intensity varies, while it is inversely proportional to the distance separating the magnet from the circuit.

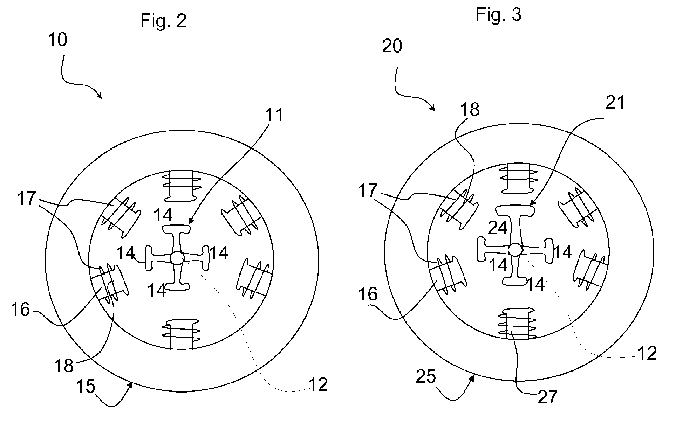

With reference to Figure 2, a synchronised motor 10 with permanent magnet of known type will now be described. In the following, only the components of the synchronised motor 10 useful for understanding the inventive aspects of interest will be described, assuming that the synchronised motor 10 itself comprises all of the other elements - themselves known - required for its normal operation.

A synchronised motor is an alternating current electric motor in which the rotation period is synchronised with the frequency of the voltage supplied to the motor, usually three-phase. The synchronised motor 10 comprises one rotor 11, that is, a portion that rotates along a circumference together with a motor shaft 12, on which a number p of polar extensions of alternating polarity is arranged, obtained by means of magnets 14 usually of the permanent type.

Such synchronised motor 10 further comprises one stator 15, that is, an element substantially in the shape of a circumference, coaxial with respect to the circumference identified by the rotor 11 and by the rotation of the magnets 14, on which so-called stator teeth 16 carrying coils 17 of the supply circuit are arranged at regular intervals. Each coil 17 comprises a plurality of turns 18. The polar extensions constituted by the stator teeth 16 with the coils 17 create a rotating magnetic field that pulls the polar extensions represented by the magnets 14 of the rotor 11. The rotational frequency, as was said, is related to the supply frequency in function of the number of polar extensions present on the rotor 11.

The operation of the motor 10 is itself known and will not be described in detain herein. Figure 2, in fact, illustrates a schematic of a motor by way of reference only, for the main constitutive elements involved and their arrangement, the number of permanent magnets 14 and the number of coils 17 being highly variable in the synchronised motors known in the state of the art.

In the context of a permanent magnet motor such as the one described in Figure 2, the following magnitudes are defined, among which those previously mentioned concerning the relation (1) to define the induced electromotive force $\psi_i$:

- the equivalent surface Seq of the circuit corresponds to the product of the surface S of the circuit represented by a turn 18 of the coil 17 in one stator tooth 16 and a number $\eta$ of such turns 18 in the coils 17;
- the magnetic field intensity corresponds to an intensity $\varphi$ of the permanent magnet 14;
- the speed variation is determined by the angular speed $\omega_m$ of the rotor 11;
- the distance separating the magnet from the circuit corresponds to the angular distance of the magnet 14 from the coil 17 $\Delta\theta_{magnet\text{-}coil}$.

In first estimation, the induced electromotive force $\psi_i$ can then be expressed (assuming, by way of non-limiting example, a unitary surface S of the circuit) as:

$$\psi_i = \omega_m \times \eta \times \varphi \times f(\Delta\theta_{magnet\text{-}coil}) \qquad (2)$$

wherein $f(\Delta\theta_{magnet\text{-}coil})$ indicates a function taking into consideration the distance between coil and magnet.

In a motor such as the motor 10 in Figure 2 the stator circuit is constructed so to maximise the contribution of the flux generated by the magnet 14 only in its immediate proximity (due to the reduced width of the air gap); this means that the function $f(\Delta\theta_{magnet\text{-}coil})$ must equal one when the distance $\Delta\theta_{magnet\text{-}coil}$ equals zero and decay very rapidly for angular distances comparable with the dimension of the magnets. A behaviour of this type can be modelled, for example, with a Gaussian function, which expresses the function $f(\Delta\theta_{magnet\text{-}coil})$ as an exponential behaviour of the type $e^{-\Delta\theta^2}$. To this purpose it is specified that the mathematic models proposed herein are introduced only for the purpose of providing a possible qualitative, as well as simplified interpretation of the physical phenomena entailed by the described systems and other mathematic models are compatible with such systems. For example, in the specific case, the function modelling the variation of the induced electromotive force $\psi_i$ between a maximum and a minimum in function of the distance between magnet and coil could also be different from Gaussian, although a similar function appears to be reasonably appropriate to describe the phenomenon.

Thus by modelling the function $f(\Delta\theta_{magnet-coil})$ in this way, the induced electromotive force $\psi_i$ is:

$$\Psi_i = \omega_m \times \eta \times \varphi \times e^{-(\Delta\theta_{magnet-coil})^2} \quad (3)$$

The above indicated relation (3) is valid for one coil 17 only and one magnet 14 only, while in the presence of multiple coils 17 and multiple permanent magnets 14, a contribution of total counter electromotive force $\psi$ detected at the stator terminals 15 is given by the sum of all of the individual contributions at the individual coils 17, such coils 17 being arranged in series.

A synchronised motor is realised with coils 17, whose number of turns varies with the varying of the angular position in which the respective stator teeth 16 are found, that is, the number of turns of each $i^{th}$ coil is a function of its angular position $\theta_i$, that is $\eta_i = \eta(\theta_i)$, and with permanent magnets 14 all generating the same magnetic field intensities, that is, $\varphi_j = \varphi$, in order to obtain the generation of sinusoidal or trapezoidal counter-electromotive forces, as occurs for example in BLAC (Brushless AC) or BLDC (Brushless DC) motors. The function $\eta_i = \eta(\theta_i)$ can be either a periodic or a constant function. The expression of the total counter-electromotive force $\psi$ which derives from this, indicating with N the total number of coils 17 and with M the total number of magnets 14, is:

$$\Psi = \sum_{k=1}^{N \times M} \Psi_k = \sum_{i=0}^{N-1} \sum_{j=0}^{M-1} \omega_m \times \eta_i \times \varphi_j \times e^{-(\Delta\theta_{i-j})^2} = \omega_m \times \eta_i \times \varphi_j \times \sum_{i=0}^{N-1} \sum_{j=0}^{M-1} e^{-(\Delta\theta_{i-j})^2}$$

$$(4)$$

In such context, that is, in the context of a synchronised motor with coils 17 arranged according to a basic configuration which determines, in interaction with the rotor magnets 14, a periodic counter-electromotive force, in particular a sinusoidal or trapezoidal periodic counter-electromotive force, such basic configuration being the normal configuration of a multipolar synchronised motor, with reference to Figure 3, which schematically illustrates a motor according to the invention, a modified motor 20 is provided. In Figure 3 the elements equal or analogous to the already illustrated elements of the motor 10 in Figure 2 maintain the same numeric references. As can be observed, a stator 25 is shown, comprising the same coils 17 arranged in the same basic configuration determining a periodic counter-electromotive force, with the exception of one coil in such basic configuration, identified for convenience as the coil 17 with index j = 0, which is substituted by an altered coil 27, that is that is has a different number (higher or lower) of turns $\eta_0$. Where $\eta_0 = \eta'$ assuming that in the illustrative but not limiting example in Figure 3 the alteration of the number of turns in the coil 27 consists of an increase. In addition, one of the permanent magnets 14 in the rotor 21 (only four magnets are shown in Figure 3, but there can be a greater number) also here the magnet 14 of index i = 0 is substituted with an altered magnet 24, configured to determine a different magnetic field intensity (greater or lesser) $\varphi_0$. Where $\varphi_0 = \varphi'$, assuming that, in the illustrative but not limiting example in Figure 3, the alteration of the magnetic field intensity of the magnet 24 consists of an increase. Furthermore, it should be specified that in figure 3 the altered magnet 24 is represented bigger only to suggest a greater magnetic field intensity, but it is obvious that such property is not necessarily obtained through an increase in the physical size of the magnet. Such arrangement determines the following formula for the total counter-electromotive force:

$$\Psi = \sum_{k=1}^{N \times M} \psi_k =$$

$$= \omega_m \times (\sum_{i=0}^{N-1}\sum_{j=0}^{M-1} \eta_i \times \varphi_j \times e^{-(\Delta\theta_{i-j})^2} + \eta_0 \times \sum_{h=1}^{M-1} \varphi_h \times e^{-(\Delta\theta_{0-h})^2} +$$

$$+ \varphi_0 \times \sum_{u=1}^{N-1} \eta_u \times e^{-(\Delta\theta_{u-0})^2} + \eta_0 \times \varphi_0 \times e^{-(\Delta\theta_{0-0})^2}) =$$

$$= \omega_m \times (\varphi \times \sum_{i=0}^{N-1}\sum_{j=0}^{M-1} \eta_i \times e^{-(\Delta\theta_{i-j})^2} + \eta_0 \times \sum_{h=1}^{M-1} \varphi_h \times e^{-(\Delta\theta_{0-h})^2} +$$

$$+ \varphi_0 \times \sum_{u=1}^{N-1} \eta_u \times e^{-(\Delta\theta_{u-0})^2} + \eta_0 \times \varphi_0 \times e^{-(\Delta\theta_{0-0})^2}) =$$

$$= \omega_m \times (\varphi \times \sum_{i=0}^{N-1}\sum_{j=0}^{M-1} \eta_i \times e^{-(\Delta\theta_{i-j})^2} + \eta' \times \varphi \times \sum_{h=1}^{M-1} e^{-(\Delta\theta_{0-h})^2} +$$

$$+ \varphi' \times \sum_{u=1}^{N-1} \eta_u \times e^{-(\Delta\theta_{u-0})^2} + \eta' \times \varphi' \times e^{-(\Delta\theta_{0-0})^2})$$

$$(5)$$

In such formula also modelling the operation of the proposed motor 20 in a substantially approximative manner and only for the illustrative purposes of the description of the invention, the following contributions can be identified:

- the first contribution given by the formula $\omega_m \times \varphi \times \sum_{i=1}^{N-1}\sum_{j=1}^{M-1} \eta_i \times e^{-(\Delta\theta_{i-j})^2}$ and representative of the mutual interaction of all the magnets 14 at normal field intensities with all of the coils 17 according to the normal coil number configuration to induce a periodic variation of the counter-electromotive force;

- a second contribution given by the formula $\omega_m \times \varphi \times \eta' \times \sum_{h=1}^{M-1} e^{-(\Delta\theta_{0-h})^2}$ and representative of the mutual interaction of all the magnets 14 at normal field intensity with the altered coil 27, having a number of turns 18 greater with respect to the normal configuration of number of turns;

- a third contribution given by $\omega_m \times \varphi' \times \sum_{u=1}^{N-1} \eta_u \times e^{-(\Delta\theta_{u-0})^2}$ and representative of the mutual interaction of the altered magnet 24, with greater field intensity $\varphi'$, with all of the coils 17 according to the basic configuration of number of turns;
- a fourth contribution given by $\omega_m \times \varphi' \times \eta' \times e^{-(\Delta\theta0-0)^2}$ and representative of the mutual interaction of the altered magnet 24 with the altered coil 27.

The influence of the four contributions just described depends strongly on the Gaussian component, itself influenced exclusively by the relative distances of the magnets 14, 24 and the coils 17, 27 respectively involved. Thus it is easy to observe that the first contribution is equal to that of the traditional or normal type of synchronised motor 10 seen previously in relation (4) minus the contribution of the altered magnet 24 and of the altered coil 27, which provide: for the second and third contributions, if they are not facing each other; for the fourth contribution if they are facing each other.

Recalling the above hypothesis regarding the alterations of the number of turns of the coil 27 and the magnetic field intensity of the permanent magnet 24 and consequently the field intensity $\varphi'$ being greater than $\varphi_j$ for any j and the number of coils $\eta'$ greater than $\eta_i$ for any i

it results that:

$$MAX_{\Delta\theta}(\omega_m \times (\eta'\times\varphi \times \sum_{h=1}^{M-1} e^{-(\Delta\theta_{0-h})^2} + \varphi'\times\sum_{u=1}^{N-1}\eta_u \times e^{-(\Delta\theta_{u-0})^2})) < MAX_{\Delta\theta}(\omega_m \times\eta'\times\varphi'\times e^{-(\Delta\theta_{0-0})^2})$$

$$(6)$$

that is, the interaction determines a deformation L in the total counter-electromotive force in correspondence to the facing of the altered coil 27 and of the altered permanent magnet 24.

Therefore, returning to the laundry washing machine 50 in figure 1 wherein, even if not explicitly shown, the synchronised motor 20 is associated with the tub 52 by means of the stator, while the basket 53 is directly coupled with the rotor 21 by means of the shaft 12 and configured to rotate around an axis substantially coinciding with the axis of the circumference identified by the rotor. The stator is fixed to the surface of said tub 52, preferably to the posterior surface of said tub.

The basket 53 is suitable for generating and assuming at least one predetermined angular position for the execution of a predetermined function of said laundry washing or laundry drying machine, under the control of the logic control module 55. Such logic control module 55 is configured to pilot the synchronised permanent magnet motor 20 and is suitable for measuring the total electromotive force induced $\psi$ on its stator coils 17. Generally, the module 55 measures the induced electromotive force $\psi$ for normal the purposes of motor piloting. However, employing the motor 20 in association with the laundry washing or laundry drying machine 50 the logic control module 55 is also able to detect whether the basket 53 is found in a predetermined angular position through the measurement of said induced electromotive force on the coils 17.

In fact, such module 55 can be conveniently configured to identify the deformation L of the periodic temporal behaviour in the induced electromotive force $\psi$ as the reference position for the detection of the angular position of the basket 53.

Such deformation L, which depending on the dimensioning of the altered magnet 24 and of the altered coil 27, can be more or less pronounced, can have the aspect of a more localised deformation, but also possibly result in an overall increase in the width within the specific electric revolution, or electric turn, affected by the angle at which the coil 27 is positioned. Thus it is possible to identify whether the motor 20 is in correspondence of such specific electric revolution.

In fact, assuming for example that the synchronised motor comprises 21 polar pairs (together with 36 stator coils), then 21 electric revolutions Ge exist within one mechanical revolution Gm. Knowing the $k^{th}$ electric revolution Ge to which the specific positioning angle $\theta_p$ is associated, it is then possible, within such electric revolution $Ge_k$, to exactly position the motor 20 at the specific positioning angle $\theta_p$ by means of techniques themselves known, such as, for example, simultaneous injection of continuous current of predetermined value on the three phases. Such continuous current of predetermined value can then operate the stop and/or the positioning of the motor 20 in the desired position, at the specific positioning angle $\theta_p$.

Previously the case was examined in which the magnets 14 each provide a first determined value of magnetic field intensity $\varphi$ while the altered magnet 24 provides a second determined value of magnetic field intensity $\varphi'$ greater or less than the first determined value of magnetic field intensity $\varphi$. This is the case in which the rotor 21 comprises only one altered magnet 24 able to generate a magnetic field of intensity equal to $\varphi'$, the other magnets 14 generating a magnetic field of intensity of $\varphi\neq\varphi'$. Therefore, under such conditions it is possible to detect only one predetermined position of the basket 53, by means of detection of the deformation L generated by means of the interaction with the altered coil 27.

It must be underlined how an embodiment of the present invention is also possible, wherein the rotor 21 comprises, in addition to the altered magnet 24, at least one additional altered magnet, preferably of the permanent type, able to generate a magnetic field with an intensity having a third determined value equal to $\varphi''$, different with respect to the first determined value $\varphi$ associated to each of the magnets 14 and also different with respect to the second determined magnetic field intensity value $\varphi'$ associated with the altered magnet 24, so that $\varphi'' \neq \varphi'$ and $\varphi'' \neq \varphi$. In other words, the rotor 21 is provided with a number C of altered magnets 24, preferably of the permanent type, each of which generates a magnetic field of intensity different from that of each magnetic field generated by each of the other altered magnets and by each of the non-altered magnets. With respect to the embodiment represented in Figure 3, such embodiment has the advantage of allowing the recognition of a plurality of predetermined angular positions assumed by the basket 53, instead of only one predetermined position. For each revolution completed by the rotor 21 with respect to the stator 25, and consequently for each revolution completed by the basket 53 around its own axis, deformations in the counter-electromotive force are in fact generated in a number equal to C, due to the opposition in series of the altered coil 27 with the C altered permanent magnets 24, the intensity of each of such deformations having a distinct value and therefore each deformation being individually recognisable. An inconvenience of obtaining increasingly unstable motor behaviour is generated, more pronounced the greater the number of altered permanent magnets C, countering the above-mentioned advantage.

The motor 20 can be of the three-phase type: in this case the stator 25, although not illustrated in Figure 6 for reasons of clarity, comprises a first, a second and a third plurality of coils, wherein each coil of the first plurality of coils comprises a plurality of turns, whose number depends on the position of the coil on the circumference of the stator 25 based on a periodic distribution. For this purpose it is specified that, during the present description, both a distribution such that the number of turns has a periodic behaviour depending on the position of the coil along the first circumference, and a uniform distribution such that all of the coils comprise the same number of turns should be considered "periodic distributions".

In the same way, each coil of the second plurality of coils comprises a plurality of turns, whose number depends on the position of the coil on the circumference of the stator 25 based on said periodic distribution out of phase by 120˚ and each coil of the third plurality of coils comprises a plurality of turns, whose number depends on the position of the coil on said first circumference based on such periodic distribution out of phase by 240˚.

The coil of the second plurality of coils out of phase by 120˚ with respect to said altered coil (with a first predetermined number of turns) of the first plurality of coils can comprise a second predetermined number of turns, different from the number of turns that such coil would need to comprise based on the periodic distribution, and/or the coil of the third plurality of coils out of phase by 240˚ with respect to the coil of the first plurality of coils can comprise a third predetermined number of turns, different from the number of turns that such coil would need to comprise based on such periodic distribution.

The second predetermined number of turns can be equal to the first predetermined number of turns and/or the third predetermined number of turns can be equal to the first predetermined number of turns and/or to the second predetermined number of turns.

In summary, a method carried out by the logic control module 55 for the detection and positioning at a specific positioning angle comprises the steps of:

- measuring the induced electromotive force $\psi$ on the coils 17 of the stator 25;
- detecting the occurrence of the deformation L;
- positioning the motor within of the specific electric revolution $Ge_k$ at which said deformation L is detected, at the specific positioning angle $\theta_p$ required, preferably by means of the injection of continuous currents of predetermined values.

When, in practice, in a laundry washing or laundry drying machine, the rotation speed of the basket 53 is relatively low, indicatively not greater that 20 revolutions per minute, it is substantially possible to operate the injection of continuous currents at the same time at which the specific electric revolution $Ge_k$ at which the deformation L occurs is detected, that is, without waiting for a complete mechanical revolution of the basket 53, since at similar low rotation velocities the basket 53 can be stopped within one electric revolution, especially when care is taken in designing the system so that the specific positioning angle $\theta_p$ is located towards the end of the specific electric revolution $Ge_k$. Alternatively, when the rotation speed of the basket 53 is higher, following the detection of the deformation L, a deceleration phase of the basket 53 can be performed such that the stop of the basket 53 occurs within one or more successive mechanical revolutions, always in correspondence of said specific positioning angle $\theta_p$. In any case, the indication relative to the specific electric revolution $Ge_k$ is used as the reference relative to which the basket 53 is positioned.

Thus, the motor 20 can be efficiently applied in top-loading laundry washing machines, where it is necessary to know the position of the basket with certainty to be able to stop it when the door of the basket reaches the proximity of the top-loading opening.

Otherwise, the motor 20 can be efficiently applied in laundry washing machines where it is required that the basket be aligned at a specific point in correspondence of which a specific action occurs, for example, the emission of liquid from a fixed nozzle on the tub into a conduit of the basket, for example a hollow rib of the basket.

According to an innovative aspect of the invention, the laundry washing machine comprising the motor 20 can have an opening on an external wall of the basket that is mainly imperforate so to allow the emission of water or other washing agents inside the basket, following positioning of the opening in correspondence of a nozzle by means of a method for identification of the position of the basket based on the generation of the above described deviation L.

Control of the above-described operations can generally be performed by a microprocessor control module arranged on the textile items treatment machine and usually already relegated to control of the motor, as well as of other operations of the machine. It should be noted that, advantageously, such control module is usually already predisposed to receive and monitor the counter-electromotive force generated by the motor, so that it is not necessary to resort to new inputs or wiring.

Control of the operations can also be performed by a DSP module (Digital Signal Processor) associated with the motor. Naturally, such DSP module is also predisposed to control the electromotive force of the motor. When such motor with DSP module operates in combination with a treatment machine, the control module of the machine controls the DSP module of the motor and exchanges signals with it. Alternatively to the DSP module, an FPGA (Field Programmable Gate Array) module or an ASIC (Application Specific Integrated Circuit) module can be used.

The synchronised motor described may also have a diameter of the stator circumference smaller than the diameter of the rotor circumference, not only greater as is shown in the example of embodiment. The permanent magnets are applied to the surface of the rotor or recessed inside of it. Preferably the rotor is of polymeric material.

It is clear that the motor just described could be used not only in laundry washing machines or, in general, in machines for the treatment of textile items, but in any apparatus in which the conditions and the technical problem described above occur, or simply when it is necessary to identify the angular position assumed by the motor. Furthermore, it is clear that the scope of the invention extends also to a machine for the treatment of textile items, in particular a laundry washing machine as defined in the corresponding independent claim and comprising also one or more of the following features:

- the induced electromotive force presenting a temporal behaviour that varies in a periodic way has a sinusoidal behaviour;
- the induced electromotive force having a temporal behaviour that varies periodically has a trapezoidal behaviour.
- the diameter of the first circumference on which the stator elements are arranged is greater than the diameter of the second circumference on which the magnets are arranged.
- the diameter of the first circumference is smaller than the diameter of the second circumference;
- the magnets are permanent magnets;
- the permanent magnets are applied to the surface of the rotor or recessed in such rotor.
- the rotor is of polymeric material.
- the basket directly coupled with the rotor is configured to rotate around an axis substantially coinciding with the axis of such second circumference of the rotor.
- the logic control means configured to identify the deformation of the periodic temporal behaviour in the induced electromotive force are configured to measure the electromotive force induced in such plurality of coils.
- the logic control means are adapted to drive to pilot the synchronised motor and suitable to measure the induced electromotive force in the plurality of coils.
- the logic control module is configured to exchange control signals with a respective motor control module.

The scope extends also to a synchronised electric motor having the features of the motor means comprised in the laundry washing machine, and in particular comprising also one or more of the following features:

- the stator elements comprise at least one plurality of coils each comprising a plurality of turns, arranged at regular intervals along a first circumference and suitable to generate the overall stator magnetic field when electric current passes through them, the number of such plurality of turns of each coil in such basic configuration depending on the position of the coil on such first circumference based on a periodic distribution, such at least one respective element susceptible of perturbing such respective stator basic configuration comprising at least one coil of such at least one plurality of coils that comprises a number of turns predetermined and different with respect to the number of such plurality of turns of each coil in such basic configuration; the elements of the rotor comprise a plurality of magnets, in particular permanent magnets, arranged in such respective basic configuration at regular intervals along a second circumference and suitable for generating a magnetic field intensity with a first predetermined value, the at least one respective element susceptive of perturbing the respective rotor basic configuration comprising at least one magnet apt to generate a magnetic field with a second determined intensity value different with respect to such first value determined according to the respective basic configuration;
- the motor is three-phase and the stator comprises a first, a second and a third plurality of coils, wherein:

  each coil of the first plurality of coils comprises a plurality of turns, whose number depends on the position of the coil on such first circumference based on such periodic distribution;
  each coil of the second plurality of coils comprises a plurality of turns, whose number depends on the position of the coil on such first circumference based on such periodic distribution out of phase by 120° and
  each coil of the third plurality of coils comprises a plurality of turns, whose number depends on the position of the coil on such first circumference based on such periodic distribution out of phase by 240°.

- the coil of such at least one plurality of coils which comprises a predetermined and different number of turns comprises a number of turns lower with respect to the number of turns determined by the basic configuration.
- the coil of such at least one plurality of coils comprising a predetermined and different number of turns comprises a number of turns greater with respect to the number of turns determined by the basic configuration.

- the coil of such second plurality of coils out of phase by 120˚ with respect to such coil of such first plurality of coils comprises a second predetermined number of turns, different from the number of turns that such coil would need to comprise based on such periodic distribution, and/or the coil of such third plurality of coil out of phase by 240˚ with respect to such coil of such first plurality of coils comprises a third predetermined number of turns, different from the number of turns that such coil would need to comprise based on such periodic distribution.
- the second predetermined number of turns is equal to such first predetermined number of turns and/or such third predetermined number of turns is equal to such first predetermined number of turns and/or such second predetermined number of turns.
- such at least one magnet is suitable for generating a magnetic field intensity with a second determined value lower with respect to such first determined value according to the respective basic configuration.
- such at least one magnet is suitable for generating a magnetic field intensity with a second determined value greater with respect to such first determined value to the respective basic configuration.
- the induced electromotive force having a temporal behaviour that varies periodically has a sinusoidal behaviour.
- the induced electromotive force having a temporal behaviour that varies periodically has a trapezoidal behaviour.
- the motor is associated with logic control means adapted to drive such synchronised motor and suitable to measure the electromotive force induced on such at least one plurality of coils, such logic control means being configured to identify such deformation of the periodic temporal behaviour of the induced electromotive force and to use such deformation as reference position for the detection of an angular position assumed by such motor.

However, it is clear that the scope of the invention extends also to positioning of a rotor of a synchronised electric motor, in particular for a laundry washing machine, as defined in the corresponding independent claim and also comprising one or more of the following features:

- the operation of positioning the motor within such specific electric revolution at the specific positioning angle requested comprises operating the injection of continuous current of predetermined value.
- employing an electric motor as described and claimed as a synchronised electric motor susceptible of having a deformation in a periodic temporal behaviour of the induced electromotive force.

## Claims

1. A machine for the treatment of textile items, in particular a laundry washing machine, particularly front-loading, having a washing chamber or tub (52), a laundry basket (53) mounted in the tub (52) to rotate around an axis, motor means (10; 20) to actuate the basket (53) in rotation comprising a synchronised electric motor comprising in its turn at least one rotor (11; 21) and one stator (15; 25), said rotor (11; 21) and stator (15; 25) comprising magnetic field-generating elements respectively of rotor (14; 14, 24) and of stator (17; 17, 27) arranged according to respective basic configurations susceptible of generating a respective overall rotor magnetic field and a respective overall stator magnetic field interacting so to induce on said stator (15; 25), during the rotation of said rotor (11; 21), an induced electromotive force ($\psi$) having a temporal behaviour that varies periodically, said motor (10; 20) being associated with said basket (53) by means of said rotor (11; 21), said basket (53) being susceptible of assuming at least one predetermined angular position ($\theta_p$) for the execution of a predetermined function of said laundry washing or laundry drying machine, said machine being also associated with logic control means (55) to detect said at least one predetermined angular position ($\theta_p$) of said basket (53), **characterised in that** said rotor (14; 24) and stator (17; 27) magnetic field-generating elements comprise at least one respective element (24, 27) susceptible of perturbing said respective basic configurations according to which said magnetic field-generating elements are arranged and of determining a corresponding deformation (L) in said periodic temporal behaviour of the induced electromotive force ($\psi$), said logic control means (55) are configured to identify said deformation (L) of the periodic temporal behaviour of the induced electromotive force ($\psi$) and to use said deformation (L) as reference position for the detection of the angular position ($\theta_p$) of said basket (53).

2. The machine according to claim 1, wherein said stator elements (17, 27) comprise at least one plurality of coils (17, 27) each comprising a plurality of turns (18), arranged at regular intervals along a first circumference and suitable to generate the overall stator magnetic field when electric current passes through them, the number ($\eta$) of said plurality of turns (18) of each coil (17) in said basic configuration depending on the position of the coil (17) on said first circumference based on a periodic distribution, said at least one respective element (24, 27) susceptible of perturbing said respective stator basic configuration (25) comprising at least one coil (27) of said at least one plurality of coils (17, 27) comprising a predetermined and different number of turns (η') with respect to said number (η) of said plurality of turns (18) of each coil (17) in said basic configuration;

said rotor elements (14, 24) comprise a plurality of magnets, in particular permanent magnets, arranged in said respective basic configuration at regular intervals along a second circumference and suitable for generating a magnetic field intensity with a first determined value (φ), said at least one respective element (24, 27) susceptible of perturbing said respective rotor basic configuration (21) comprising at least one magnet (24) suitable for generating a magnetic field intensity with a second determined value (φ') different with respect to said first determined value (φ) according to the respective basic configuration.

3. The machine according to claim 2, wherein said motor (20) is three-phase and said stator (25) comprises a first, a second and a third plurality of coils, wherein:

   each coil of the first plurality of coils comprises a plurality of turns, whose number depends on the position of the coil on said first circumference based on said periodic distribution;
   each coil of the second plurality of coils comprises a plurality of turns, whose number depends on the position of the coil on said first circumference based on said periodic distribution out of phase by 120° and
   each coil of the third plurality of coils comprises a plurality of turns, whose number depends on the position of the coil on said first circumference based on said periodic distribution out of phase by 240°.

4. The machine according to claim 2 or 3, wherein said coil (27) of said at least one plurality of coils (17, 27) comprising a predetermined and different number of turns (η') comprises a number of turns lower with respect to the number of turns determined by the basic configuration.

5. The machine according to claim 2 or 3, wherein said coil (27) of said at least a plurality of coils (17, 27) comprising a predetermined and different number of turns (η') comprises a number of turns higher with respect to the number of turns determined by the basic configuration.

6. The machine according to claim 3, 4 or 5, wherein:

   the coil of said second plurality of coils out of phase by 120° with respect to said coil of said first plurality of coils comprises a second predetermined number of turns, different from the number of turns that such coil would need to comprise based on said periodic distribution and/or
   the coil of said third plurality of coils out of phase by 240° with respect to said coil of said first plurality of coils comprises a third predetermined number of turns, different from the number of turns that such coil would need to comprise based on said periodic distribution, in particular said predetermined number of turns being equal to said first predetermined number of turns and/or said third predetermined number of turns being equal to said first predetermined number of turns and/or to said second predetermined number of turns.

7. The machine according to any of the claims from 2 to 6, wherein said at least one magnet (24) is suitable for generating a magnetic field intensity with a second determined value (φ') lower with respect to said first determined value(φ) according to the respective basic configuration.

8. The machine according to any of the claims from 2 to 6, wherein said at least one magnet (24) is suitable for generating a magnetic field intensity with a second determined value (φ') higher with respect to said first determined value(φ) according to the respective basic configuration.

9. The machine according to any of the claims from 2 to 8, wherein said logic control means (55) configured to employ said deformation (L) as reference position for the detection of the angular position of said basket (53), are also configured to command the stop and/or the positioning at said one predetermined angular position ($\theta_p$), in particular by means of injections of continuous current on one or more coils (17) of stator (25).

10. The machine according to any of the claims from 2 to 9, wherein said predetermined angular position ($\theta_p$) for the execution of a predetermined function of said laundry washing machine (50) corresponds to the position of an opening on a wall of said basket (53), a nozzle facing onto said opening for the emission of water or other washing agents inside the basket (53).

11. The machine according to any of the claims from 2 to 10, wherein said rotor elements (14, 24) also comprise at least one magnet suitable for generating a magnetic field intensity with a third determined value ($\varphi''$), said third determined value ($\varphi''$) being different with respect to said first determined value ($\varphi$) and said second determined value ($\varphi'$).

12. A synchronised electric motor comprising at least one rotor (11; 21) and one stator (15; 25), said rotor (21) and stator (25) comprising respective rotor (14; 24) and stator (17; 27) magnetic field-generating elements in respective normal configurations susceptible of generating a respective overall rotor magnetic field and a respective overall stator magnetic field interacting so to induce on said stator (15; 25), during the rotation of said rotor (11; 21) an induced electromotive force ($\psi$) with a temporal behaviour that varies periodically, said motor being associated with said basket (53) by means of said rotor (11)
**characterised in that**
said rotor (14; 24) and stator (17; 27) magnetic field-generating elements comprise at least one element (24, 27) susceptible of perturbing said normal configurations and of determining a corresponding deviation (L) in said periodic temporal behaviour of the induced electromotive force ($\psi$).

13. The motor comprising the technical features of the motor means as defined in the machine for the treatment of textile items according to one or more of the claims from 1 to 11.

14. The motor according to claim 12, wherein said motor (20) is equipped with a respective control module, in particular said control means (55) being arranged remotely with respect to said motor (20).

15. A method for the positioning of a rotor of a synchronised electric motor, in particular for a laundry washing machine, comprising the operation of
measuring the induced electromotive force ($\psi$) on coils (17) of stator of said synchronised electric motor (20);
**characterised in**
also providing the operations of:

   providing a synchronised electric motor (20) susceptible of having a deformation (L) in a periodic temporal behaviour of the induced electromotive force ($\psi$);
   detecting the occurrence of said deformation (L) and
   positioning the motor (20) within the specific electric revolution ($Ge_k$) in which said deformation (L) of the requested specific positioning angle ($\theta_p$) is detected.

Fig. 1

Fig. 2

Fig. 3